# EUROPEAN PATENT APPLICATION

(11) **EP 4 194 128 A1**
(43) Date of publication of application: **14.06.2023**
(21) Application number: 21213001.7
(22) Date of filing: 08.12.2021
(51) Int. Cl.: B23C 5/10

(54) **MILLING TOOL WITH REINFORCED CHIP DIVIDING GROOVES**

(71) Applicant: AB Sandvik Coromant, 811 81 Sandviken (SE)
(72) Inventor: BLURTSYAN, David, 811 81 SANDVIKEN (SE)
(74) Representative: Sandvik

(57) **Abstract**

The invention relates to a milling tool (1) having a longitudinal axis (C) around which the milling tool is rotatable in a direction of rotation (R), wherein a plurality of teeth (6) and a corresponding number of flutes (7) extend axially along a cutting portion (5) following a helical path around the longitudinal axis, wherein each tooth (6) comprises a main cutting edge (10) formed at the intersection between a land (9) and a rake face in surface (8) of the flute. At least one chip dividing groove (11) formed in the land (9) intersects the flute surface (8), forming an edge, a portion of which forming a trailing edge (16) extending from the root of the chip dividing groove to the trailing corner, with respect to the direction of rotation. A reinforcement surface at trailing edge (16) provides a locally reduced rake angle.

## Description

### TECHNICAL FIELD

The invention relates to milling tools, and in particular to milling tools for metal cutting.

### BACKGROUND ART

Milling tools, such as solid end mills made of cemented carbide, may be used for machining a metal workpiece. The machining process is often controlled by a CNC machine tool, to which the milling tool is arranged.

In a milling operation, the milling tool will be subjected to wear, which may deteriorate the performance of the milling tool over time, reduce the quality of the machined surface, and shorten the tool life.

When machining a workpiece using a milling tool, chips are formed when the cutting edges of the milling tool continuously enter and exit the workpiece material. In some instances, for example when milling with a significant axial depth of cut, the chips that are formed may be quite long. The main issue with the long chips is poor chip evacuation from the machine - long chips are filling the whole working area, overloading the chip evacuation conveyer and causing the machine damage. Long chips are difficult to remove from the cutting area which increases a risk of chip re-cutting and decreases the tool life. To improve chip evacuation, so called chip splitters or chip breakers in the form of chip dividing grooves are usually applied at the cutting edges to split the long chips into shorter ones. For example, US2855657 discloses a milling cutter with a plurality of V-shaped chip breaking notches.

However, even though chip splitters may improve chip evacuation, the disruption of the cutting process - as the continuous chip formation along the helical cutting edge is interrupted by the chip splitter - may result in increased vibrations that potentially may reduce the quality of the machined surface and cause cutting edge damages around the chip splitters.

Hence, there is a need for milling tools having improved performance and tool life.

### SUMMARY

It is an object of the present invention to mitigate the shortcomings of the prior art and to provide a milling tool which is less prone to tool wear and provides a good finish of the machined surface.

Thus, the invention relates to a milling tool having a longitudinal axis around which the milling tool is rotatable in a direction of rotation, wherein the milling tool comprises a shank portion and a cutting portion that extends along the longitudinal axis from a front end of the milling tool towards the shank portion. The cutting portion comprises a plurality of teeth and a corresponding number of flutes extending axially along the cutting portion following a helical path around the longitudinal axis. Each tooth comprises a land and a rake face at least partly formed by a surface of the flute. A main cutting edge is formed at the intersection between the land and the rake face formed by the flute surface. At least one chip dividing groove is formed in the land such as to intersect the main cutting edge. The chip dividing groove at its intersection with the main cutting edge includes, with respect to the direction of rotation, a leading corner, a trailing corner and a groove edge delimiting the chip dividing groove from the rake face. The groove edge comprises a leading edge extending from the leading corner to a root of the chip dividing groove and a trailing edge extending from the root of the chip dividing groove to the trailing corner. The milling tool comprises a reinforcement surface located at the rake face adjacent at least a part of the trailing edge of the chip dividing groove. The reinforcement surface is a surface recessed in the flute surface such as to provide a locally reduced rake angle.

The milling tool may be an end mill, for example a solid end mill wherein the shank portion and the cutting portion form an integral one-piece component, for example made of cemented carbide or some other material, such as high speed steel or ceramic. The milling tool may be uncoated or coated with a layer of a different material to improve its performance, as is well-known in the art. The front end of the milling tool may have various different shapes, and may for example include front cutting edges with sharp, chamfered or radiused corners.

When using a helical end mill with chip dividing grooves, a cutting process that is otherwise relatively stable will be disrupted as the chip formation is interrupted by the chip dividing grooves. More specifically, a chip sliding along the main cutting edge will be terminated at the leading corner of the nearest chip dividing groove and the cutting edge will re-engage with the workpiece at the trailing side of the chip dividing groove. During the re-engagement, the radial cutting force will increase, and the changing cutting forces may result in increased vibrations, which may increase the tool wear. For example, the risk of cutting edge chipping may increase. The inventor has found that for a helical end mill with chip dividing grooves, the parts that are most susceptible to wear are the parts around each chip dividing groove where the tool re-engages the workpiece i.e. the trailing half of each chip dividing groove. In particular, it has been found that edge chipping is more common in this region. By providing a reinforcement surface according to the above, this region will be strengthened and more resistive to chipping, thus increasing the tool life. Smoother re-engagement of the cutting edge with the workpiece may also decrease tool vibration.

The reinforcement surface may for example be obtained by removal of material resulting in a locally modified geometry of a part of the flute surface and the trailing edge.

Accordingly, the rake face of a milling tool according to this disclosure will comprise a nonrecessed (conventional) portion corresponding to the flute surface and at least one recessed portion (i.e. the reinforcement surface).

The expression "adjacent" as used herein when referring to the location of the reinforcement surface with respect to the groove edge, should be understood as directly adjoining such edge, and not merely being in close proximity thereto. Accordingly, the reinforcement surface is on one side delimited by the groove edge (and in particular at least a part of the trailing edge). On an opposite side, towards the flute surface, the reinforcement surface is delimited by a reinforcement edge, i.e. the edge between the reinforcement surface and the flute surface.

Accordingly, a border of the reinforcement surface comprises at least the reinforcement edge and at least a part of the groove edge.

A leading corner and a trailing corner are herein to be considered as the points at which the main cutting edge ends and begins, respectively. A main cutting edge should be understood as all parts of the cutting edge that are located on the original helical line, i.e. all parts that have not been modified by the presence of a chip splitting groove and/or a reinforcement surface. However, not only the main cutting edge may be in cutting engagement with the workpiece, but also the leading and trailing corners and parts of the trailing edge of the chip dividing groove, depending on the specific geometry of the chip dividing groove and the radial cutting depth used. For example, re-engagement with the workpiece, as discussed above, may occur at some point along the trailing edge.

A rake angle describes the angle of the cutting face relative to the workpiece. For example, as conventionally understood, the rake angle may define the angle between the cutting face, i.e. the rake face (e.g. the part of the flute surface adjacent the cutting edge), and a line perpendicular to the workpiece surface at the point of engagement. A "reduced" rake angle is conventionally understood as a less positive (or more negative) rake angle. Such reduced rake angle increases cutting forces, and increase the strength of the cutting edge.

At the chip splitter, the local rake angle along the trailing edge may be different from, e.g. smaller than, the rake angle along the main cutting edge. If not specified otherwise, the expression "rake angle", and in particular "local rake angle", as used herein, refers to the local rake at the trailing edge, e.g. as formed by the reinforcement surface, in a direction along the rake face which is perpendicular to the trailing edge. The rake angle at the main cutting edge is preferably positive, and the main cutting edge preferably lacks a reinforcement surface.

If the non-reinforced rake angle is positive, a locally reduced rake angle, as used herein, refers to a rake angle that is less positive or even negative. Accordingly, the locally reduced rake angle is less positive (or more negative) than a rake angle that would have been present at a corresponding point along the trailing edge of the chip dividing groove in the absence of a reinforcement surface. The locally reduced rake angle at any part of the trailing edge bordering the reinforcement surface may also be smaller (e.g. less positive) than the rake angle along the main cutting edge.

In other words, along any part of the trailing edge bordering the reinforcement surface, the rake angle will be smaller (less positive or even negative) than the rake angle that would have been present in the absence of such reinforcement surface, and preferably also smaller than the rake angle that is present along the main cutting edge.

The trailing corner may be located on the border of the reinforcement surface, meaning that the reinforcement surface is located not only adjacent at least a part of the trailing edge, but also adjacent the trailing corner. In such cases, the trailing corner will correspond to the position at which the reinforcement edge and the trailing edge meets the main cutting edge.

The point of the trailing edge at which the end mill will re-engage a workpiece during cutting will depend on the radial cutting depth used. For small radial cutting depths, the point of re-engagement will be close to the trailing corner, but for large radial cutting depths, the point of re-engagement could be closer to the root of the chip dividing groove.

The reinforcement surface is located adjacent to, and thus extends along, at least a part of the trailing edge. The reinforcement surface may for example extend along at least half of the trailing edge. According to some embodiments, the reinforcement surface is located adjacent the entire trailing edge. In other words, the reinforcement surface may extend along the trailing edge all the way to the root of the chip dividing groove. Thereby, the reinforcement surface, providing a locally reduced rake angle, will be present at the point where the edge re-engages the workpiece also for large radial cutting depths.

The trailing edge may comprise a plurality of straight and/or curved interconnected segments. For example, the trailing edge may include a trailing edge kink at which the trailing edge changes direction. The trailing edge may also comprise differently curved segments that are interconnected to provide a smooth transition to the main cutting edge.

According to some embodiments, the reinforcement surface does not extend beyond the root of the chip dividing groove in a direction along the helical path of the tooth towards the leading corner. In other words, the reinforcement surface will only be located adjacent the trailing edge, but not adjacent any part of the leading edge. The leading edge is not experiencing chipping and does not need to be reinforced. A reinforcement surface adjacent the leading edge may also change the shape of the end part of the chip and potentially adversely affect the conditions of chip separation from the workpiece material.

The width of the reinforcement surface, i.e. the distance across the reinforcement surface from the trailing edge to the reinforcement edge as measured in a direction perpendicular to the trailing edge, may be constant or vary along the extension of the trailing edge. The maximum width of the reinforcement surface may be smaller than the radial depth of the chip dividing groove, wherein such depth is measured in a radial direction from the root of the chip dividing groove to the initial position of the main cutting edge before grinding the chip dividing groove. The maximum width of the reinforcement surface may be larger than 0.05 times the radial depth of the chip dividing groove. A maximum width of the reinforcement surface in the range of 0.05-1 times the depth of the chip dividing groove may be beneficial in order to provide a sufficient reinforcing effect without creating too high resistance for the cutting process. As an example, the maximum width of the reinforcement surface may be in the range of 0.1-0.5 times the depth of the chip dividing groove.

The locally reduced rake angle may vary within the reinforcement surface along the trailing edge. If, for example, forming the reinforcement surface by grinding, the rake angle along the trailing edge bordering the reinforcement surface may vary due to a varying width of the reinforcement surface and varying position of the trailing edge with respect to the flute. The reinforcement surface could also be intentionally produced with variable angle to the flute surface, for example in order to provide a smooth transition between the trailing edge and the main cutting edge at the trailing corner. In any case, at each point along the trailing edge bordering the reinforcement surface, the local rake angle is smaller than it would have been at corresponding locations if no reinforcement surface was present.

At each point along the trailing edge bordering the reinforcement surface, the local reduction of the rake angle may for example be between 5° and 30°. If the non-reinforced rake angle (i.e. the rake angle in the absence of a reinforcement surface) is positive, the locally reduced rake angle may be either less positive, zero or even negative. As an example, if the non-reinforced rake angle would be 20° at a certain location, a reinforcement surface causing a reduction of the rake angle by 15° would result in an actual rake angle of 5° at such location.

For some applications, a positive rake angle may be preferred not only at the main cutting edge but also at the trailing edge bordering the reinforcement surface since a 0° rake angle, or a negative rake angle, may create too high cutting resistance. As an example, the locally reduced rake angle adjacent the point at which the reinforcement edge meets the trailing edge, and in a region of the reinforcement surface in the vicinity of such point, may be between 1° and 9°. Such rake angle may be small enough to provide a good protection against edge chipping while still not creating too high load on the trailing edge.

The reinforcement surface may have various shapes. For example, the reinforcement surface may be convex, flat, or even slightly concave. Such reinforcement surface may be easy to accomplish in production, and could for example by applied by grinding. As an example, the same grinding wheel as the one used for grinding the chip dividing groove may be used. If such grinding wheel has a rounded profile, the resulting reinforcement surface would actually be slightly concave, but if the width of the reinforcement surface is small such concaveness would be too small to be recognized, and the surface would be practically flat.

The chip dividing groove may comprise a reinforcing bevel extending across the land and intersecting the flute surface and/or the reinforcement surface in a region in which the trailing edge extends, such that the bevel, at its intersection with the flute surface and/or the reinforcement surface, extends along at least a part of the trailing edge. Such reinforcing bevel may provide additional strength to the trailing part of the chip dividing groove. More specifically, the reinforcement bevel creates more favorable cutting conditions for the trailing edge during its re-engagement with workpiece material. That is, the edge is not taking the full load at once, but indents into the material by starting with small chip thickness and reaches full chip thickness only at the moment the main cutting edge steps into action (i.e. at the trailing corner).

The position of the trailing corner, i.e. the extension of the trailing edge, will not only depend on the location and width of the reinforcement surface but also on the location and extension of the reinforcing bevel. For example, the bevel may have a width at the flute surface that match the width of the reinforcement surface in a way such that the "end point" of the bevel at its intersection with the flute surface coincides with the trailing corner. Thereby, there will be less kinks along the trailing edge which helps to decrease the tool wear, since such kinks are weak points from tool wear perspectives. Alternatively, the reinforcement bevel may be narrower, such that, compared to the trailing corner, the bevel may be located closer to the chip dividing groove. Such narrow reinforcement bevel might reduce the overall width of the chip dividing groove while still providing sufficient strength increase.

Accordingly, an end point of the bevel at its intersection with the rake face may coincide with the point at which the reinforcement edge meets the trailing edge and the main cutting edge, or be located at a position closer to the chip dividing groove compared to such point, i.e. the bevel may not extend all the way to the trailing corner. However, it is also envisaged that the end of the bevel may be located farther from the chip dividing groove than the point at which the reinforcement edge meets the trailing edge. Thereby, the end of the bevel would correspond to the transition between the trailing edge and the main cutting edge and thus define the trailing corner. In such case, the reinforcing bevel does not only intersect the reinforcement surface but also a part of the flute surface.

The bevel may be a flat chamfered surface. A projection of such flat chamfered surface on the flute surface and/or the reinforcement surface may, for example, have an angle of 35°- 45° to the longitudinal axis of the milling tool. As another alternative, the bevel may be rounded, or partly rounded. The bevel, for example when seen in a cross-section through the land perpendicular to the extension of the chip dividing groove, may thus have various different shapes, symmetrical or asymmetrical - for example a shape formed by a combination of different curved segments of different radii. If the end of the bevel corresponds to the position of the trailing corner, for example if the bevel end coincides with the point at which the reinforcement edge meets the trailing edge, a flat chamfered bevel will provide a transition between the trailing edge and the main cutting edge in the form of a corner that is less sharp than such transition in the absence of a bevel. A rounded bevel may provide a transition between the trailing edge and the main cutting edge that is even smoother. A flat chamfered bevel may be easier and less expensive to produce than a rounded bevel.

As discussed, the largest width of the reinforcement surface may be in the range of 0.05-1 times the depth of the chip dividing groove. For milling tools including a rounded reinforcing bevel, such largest width of the reinforcement surface may correspond to the radius of the projection of the rounded bevel at the flute surface and/or the reinforcement surface. A transition between a linear (non-beveled) part of the trailing edge and the main cutting edge may thus be formed by a single radius, providing a smooth transition to the main cutting edge.

The width of the reinforcement surface could be constant or variable along the trailing edge of the chip dividing groove. For example, if no reinforcement bevel is present, the width of the reinforcement surface may be constant. If a reinforcement bevel is present - either a rounded bevel or a flat chamfer - the width of the reinforcement surface may vary. The width may then be largest close to the trailing corner and decrease when moving along the trailing edge towards the root of the chip dividing groove.

According to some embodiments, the inclination angle between a leading part of the main cutting edge (i.e. the part of the main cutting edge located immediately forward of the chip dividing groove with respect to a tool rotation direction) and the leading edge of the chip dividing groove is above 90°. The inclination angle of the leading edge may vary along its extension towards the root of the chip dividing groove, i.e. the chip dividing groove doesn't have to be V-shaped but may for example have a curved shape, in which the inclination angle increases along the leading edge from a minimum inclination angle at the leading corner to a maximum inclination angle at the root of the chip dividing groove. Nevertheless, the inclination angle at all parts of the leading edge, and in particular the minimum inclination angle, is preferably above 90° to provide undisturbed chip flow and chip evacuation at the rake side of the tool. Expressed differently, the leading edge should have an angle to chip flow direction that is above 0°, and for example between 0° and 15°.

For end mills having teeth for which the helix angle varies, or wherein different teeth have different helix angles, the respective leading edges of different chip dividing grooves may have different inclination angles depending on the helix angle at the location of the chip dividing groove.

The chip dividing groove may extend across the land in a direction that is perpendicular, or substantially perpendicular, to the longitudinal axis.

Each chip dividing groove of a first tooth may be axially displaced from each chip dividing groove of a second tooth that follows the first tooth in the tool rotation direction. In other words, the chip dividing grooves of a first tooth may be offset in the axial direction with respect to chip dividing grooves of a second tooth. Thereby, the main cutting edge of the second tooth will, at least to some extent, cut material that has been left by the first tooth due to the chip dividing groove. The axial displacement may be such that no part of a chip dividing groove of the second tooth overlaps any part of a chip dividing groove of the fist tooth.

### BRIEF DESCRIPTION OF DRAWINGS

In the following, example embodiments will be described in greater detail and with reference to the accompanying drawings, in which:
Fig. 1 illustrates an end mill with chip dividing grooves according to an embodiment of the invention.
Fig. 2 shows a chip dividing groove of such end mill in more detail.
Figs. 3-5 show cross sections as indicated in fig. 2.
Figs. 6-7 illustrate a chip dividing groove according to second embodiment.
Fig. 8 illustrates a chip dividing groove according to a third embodiment.
Fig. 9 illustrates a chip dividing groove according to a fourth embodiment.
Fig. 10 illustrates a chip dividing groove according to a fifth embodiment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

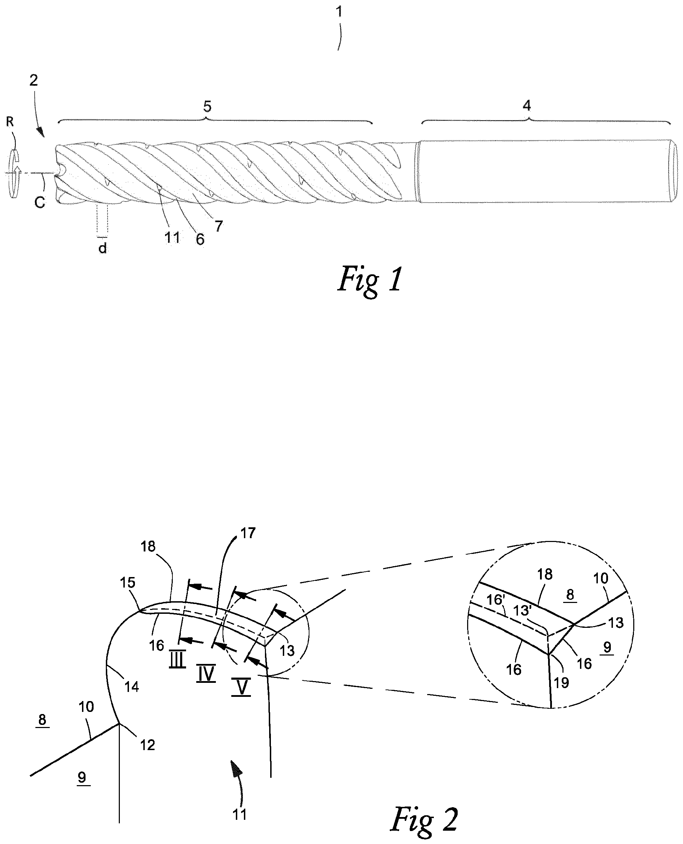

Fig. 1 shows a milling tool in the form of an end mill 1 having a longitudinal axis C around which the end mill 1 is rotatable in a direction of rotation R. The end mill 1 comprises a shank portion 4 and a cutting portion 5 that extends along the longitudinal axis C from a front end 2 of the milling tool towards the shank portion 4. The cutting portion comprises a plurality of teeth 6 and a corresponding number of flutes 7 extending axially along the cutting portion 5 following a helical path around the longitudinal axis C. Each tooth 6 comprises a rake face partly formed by a surface 8 of the flute, a land 9 and a main cutting edge 10 formed at the intersection between the flute surface 8 and the land 9 (see fig. 2). A plurality of chip dividing grooves 11 are formed in the land such as to intersect the main cutting edge 10. Each chip dividing groove 11 extends partly across the land in a direction that is substantially perpendicular to the longitudinal axis C. The chip dividing grooves of one tooth 6 are offset in the axial direction by a distance d with respect to the chip dividing grooves of an adjacent tooth 6. Thereby, no bumps of material will be left uncut on the machined surface.

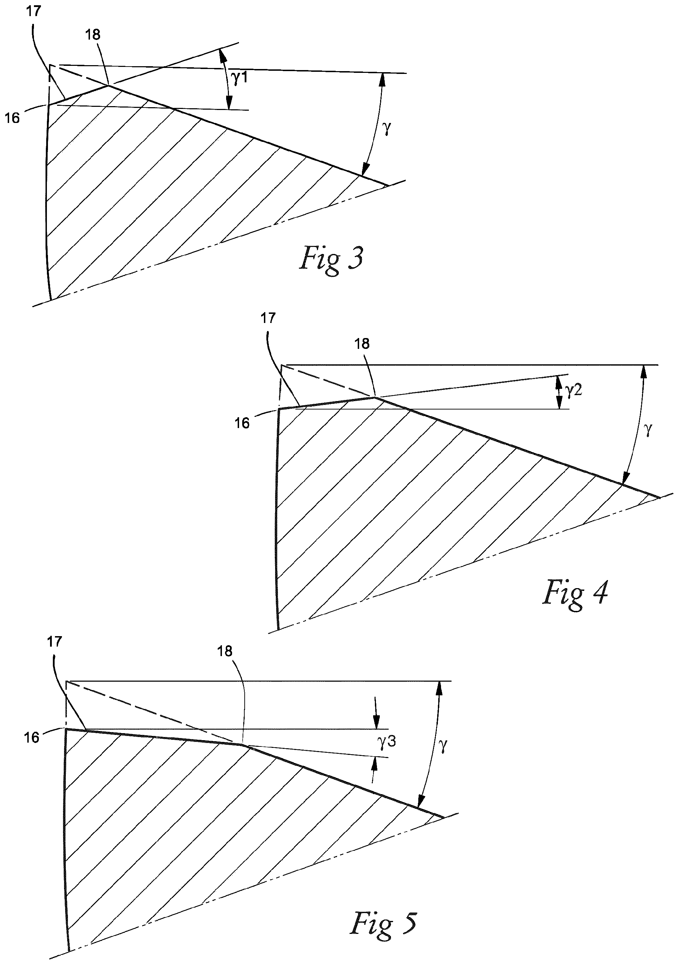

Fig. 2 is an enlarged view of one of the chip dividing grooves 11 according to a first embodiment of the invention. The chip dividing groove 11, at its intersection with the main cutting edge, includes, with respect to the direction of rotation R, a leading corner 12 and a trailing corner 13 and a groove edge delimiting the chip dividing groove 11 from the rake face. The groove edge comprises a leading edge 14 extending from the leading corner to a root 15 of the chip dividing groove, and a trailing edge 16 extending from the root 15 of the chip dividing groove to the trailing corner 13. A reinforcement surface 17 is located adjacent the trailing edge 16. The reinforcement surface has been formed by removing material at the flute surface 8 in the region of the trailing part of the chip dividing groove. Thus, the reinforcement surface 17 is a surface being recessed in the flute surface 8, forming a part of the rake face that has a locally reduced rake angle (as illustrated in figs. 3-5). A reinforcement edge 18 delimits the reinforcement surface from the flute surface 8. The trailing corner 13 is formed at the point at which the reinforcement edge 18 and the trailing edge 16 meet the main cutting edge 10.

At a point where the trailing edge 16 reaches the land 9, there is a trailing edge kink 19, where the trailing edge 16 changes direction on its way towards the trailing corner 13.

In the absence of a reinforcement surface 17, the location of the trailing corner 13 and the extension of the trailing edge 16 and part of the main cutting edge 10 would be slightly different, as illustrated by dashed lines in fig. 2 (in which reference numerals 16' and 13' indicate the trailing edge and trailing corner, respectively, in the absence of a reinforcement surface 17.

According to the embodiment shown in fig. 2, the reinforcement surface 17 has a width, i.e. a distance across the reinforcement surface from the trailing edge to the reinforcement edge as measured in a direction perpendicular to the trailing edge, that varies along the trailing edge 16. The width is greatest near the trailing corner 13 and decreases towards the root 15 of the chip dividing groove, as best seen in figs. 3-5.

Figs. 3-5 show the locally reduced rake angle in cross sections as indicated in fig. 2. In the section according to fig. 3, the original, non-modified, rake angle γ is positive whereas the locally reduced rake angle γ is negative. The locally reduced rake angle γ₂ in the section according to fig. 4 is also negative, although the rake angle reduction is not as large as in the section shown in fig. 3. In the section according to fig. 5, the locally reduced rake angle γ₃ is positive, but still smaller than the original rake angle γ.

Thus, according to this embodiment, the rake angle along the trailing edge varies. More specifically, the magnitude of the rake angle reduction increases in a direction from the trailing corner towards the root of the chip dividing groove.

The original rake angle γ is the same in all cross sections shown in figs. 3-5. However, the original rake angle may also be different in different cross section, e.g. as dependent on the flute shape. In any case, the locally reduced rake angles γ₁ - γ₃ would always be smaller than the corresponding original rake angle γ.

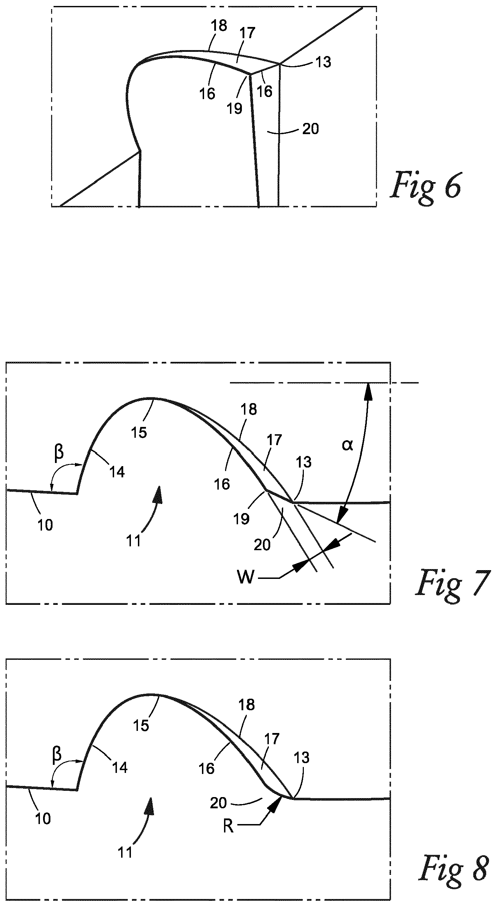

Figs 6-10 illustrate embodiments in which the chip dividing groove further includes a reinforcing bevel 20.

Fig. 6 shows an embodiment with a reinforcing bevel 20 in the form of a flat chamfered surface extending across the land of the tooth. The bevel extends, at its intersection with the reinforcement surface, from the trailing corner 13 along a part of the trailing edge 16. Fig. 7 is a top view of the chip dividing groove according to this embodiment, in which the inclination α of the flat chamfered surface 20 with respect to the longitudinal axis is indicated. The inclination angle α may be between 30° and 45°. As seen in fig. 7, the width of the reinforcement surface decreases towards the root of the chip dividing groove from a maximum width W. Due to the bevel 20, the trailing edge kink 19 is less sharp than the trailing edge kink according to the embodiment shown in fig. 2. The reinforcing bevel 20, when combined with the reinforcement surface 17, may provide an even stronger edge that is less prone to chipping.

Fig. 8 shows yet another embodiment wherein the reinforcing bevel 20 has a rounded shape wherein the projection of the bevel on the reinforcement surface has a radius of curvature R. The transition between the linear part of the trailing edge and the trailing corner 13 is thereby smooth and does not include any sharp trailing edge kinks.

As indicated in fig. 7, the width of the reinforcement surface is measured across the reinforcement surface, from the trailing edge to the reinforcement edge, in a direction perpendicular to the trailing edge, disregarding the bevel. Accordingly, for the embodiments illustrated in figs. 6-8, the reinforcement surface has a maximum width W close to the trailing corner 13.

As indicated in figs. 7 and 8, the inclination angle β between a leading part of the main cutting edge 10 and the leading edge 14 is above 90°. Thereby, the chip dividing groove will not disturb the chip flow.

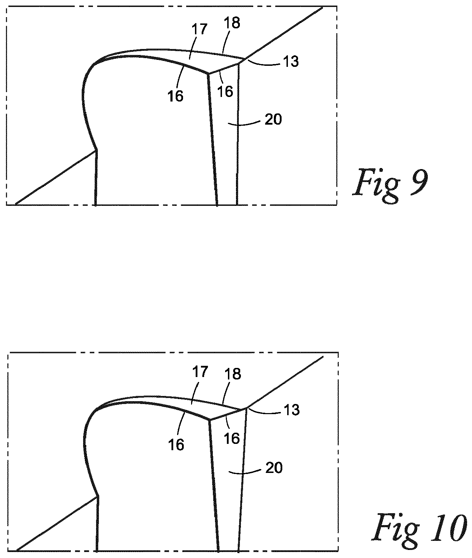

Fig. 9 illustrates an embodiment wherein the bevel 20 is located closer to the chip dividing groove compared to the trailing corner 13. Thus, the reinforcement surface 17 and the trailing edge 16 extends beyond the bevel 20, and the trailing corner 13 does not coincide with the end point of the bevel 20. In other words, the bevel does not extend all the way to the trailing corner 13.

Fig. 10 illustrates an embodiment wherein the end of the bevel 20 is located farther from the chip dividing groove than the point at which the reinforcement edge 18 meets the trailing edge 16. In such embodiment, the trailing corner 13 is located at the end of the bevel 20 and not at the point at which the reinforcement edge 18 meets the trailing edge 16.

## Claims

1. A milling tool (1) having a longitudinal axis (C) around which the milling tool is rotatable in a direction of rotation (R), wherein the milling tool comprises a shank portion (4) and a cutting portion (5) that extends along the longitudinal axis from a front end (2) of the milling tool towards the shank portion (4), wherein the cutting portion (5) comprises a plurality of teeth (6) and a corresponding number of flutes (7) extending axially along the cutting portion (5) following a helical path around the longitudinal axis, wherein each tooth (6) comprises a land (9) and a rake face at least partly formed by a surface (8) of the flute, wherein a main cutting edge (10) is formed at the intersection between the land (9) and the rake face formed by the flute surface (8), and wherein at least one chip dividing groove (11) is formed in the land (9) such as to intersect the main cutting edge (10), wherein the chip dividing groove (11) at its intersection with the main cutting edge (10) includes, with respect to the direction of rotation (R), a leading corner (12) and a trailing corner (13) and a groove edge delimiting the chip dividing groove (11) from the rake face and which comprises a leading edge (14) extending from the leading corner to a root (15) of the chip dividing groove and a trailing edge (16) extending from the root (15) of the chip dividing groove to the trailing corner (13), **characterized in that** the milling tool (1) comprises a reinforcement surface (17) located at the rake face adjacent at least a part of the trailing edge (16) of the chip dividing groove (11), wherein the reinforcement surface (17) is a surface recessed in the flute surface (8) such as to provide a locally reduced rake angle.

2. A milling tool according to claim 1 wherein the trailing corner is located at a border of the reinforcement surface.

3. A milling tool according to any of the previous claims, wherein the reinforcement surface is located adjacent the entire trailing edge.

4. A milling tool according to any of the previous claims, wherein the trailing edge comprises a plurality of straight and/or curved interconnected segments.

5. A milling tool according to any of the previous claims, wherein the reinforcement surface does not extend beyond the root of the chip dividing groove in a direction along the helical path of the tooth towards the leading corner.

6. A milling tool according to any of the previous claims, wherein the width of the reinforcement surface as measured from the trailing edge in a direction perpendicular thereto, is smaller than the radial depth of the chip dividing groove.

7. A milling tool according to any of the previous claims, wherein the locally reduced rake angle varies along the trailing edge adjacent the reinforcement surface.

8. A milling tool according to any of the previous claims, wherein the local reduction of the rake angle, at each point along the trailing edge adjacent the reinforcement surface, is between 5° and 30°.

9. A milling tool according to any of the previous claims, wherein the reinforcement surface is flat.

10. A milling tool according to any of the previous claims, wherein the chip dividing groove further comprises a reinforcing bevel (20) extending across the land and intersecting the flute surface and/or the reinforcement surface in a region in which the trailing edge extends, such that the bevel (20), at its intersection with the flute surface and/or the reinforcement surface, extends along at least a part of the trailing edge.

11. A milling tool according to claim 10, wherein the bevel is a flat chamfered surface.

12. A milling tool according to claim 11, wherein a projection of the flat chamfered surface on the flute surface and/or the reinforcement surface has an angle (α) of 35°-45° to the longitudinal axis.

13. A milling tool according to any of the previous claims, wherein the inclination angle (β) between a leading part of the main cutting edge and the leading edge of the chip dividing groove is above 90°.

14. A milling tool according to any of the previous claims, wherein the chip dividing groove extends across the land in a direction that is perpendicular, or substantially perpendicular, to the longitudinal axis.

15. A milling tool according to any of the previous claims, wherein each chip dividing groove of a first tooth is axially displaced from each chip dividing groove of a second tooth that is circumferentially adjacent to the first tooth.
